# EUROPEAN PATENT APPLICATION

(11) **EP 4 822 561 A1**
(43) Date of publication of application: **14.10.2026**
(21) Application number: 26168952.5
(22) Date of filing: 30.03.2026
(51) Int. Cl.: G06F 16/906

(54) **SYSTEM AND METHOD WITH MACHINE LEARNING FRAMEWORK FOR SYSTEM FORENSICS**

(30) Priority: 01.04.2025 US 202519097238
(71) Applicant: Robert Bosch GmbH, 70442 Stuttgart (DE)
(72) Inventor: Mai, Zheda, Columbus, OH, 43228 (US); Heshmati, Sam, Campbell, CA, 95008 (US); Abraham, Zubin, Mountain View, CA, 94040 (US)
(74) Representative: Isarpatent

(57) **Abstract**

A computer-implemented method and system relate to performing a task in a time series domain using different modalities of time series information. Time series data is received and includes numerical data for a set of channels. A digital image is generated and displays a set of graphical representations of the time series data. A tokenizer generates time series embeddings using the time series data in a channel-independent manner to preserve local semantic information. An image encoder generates image embeddings using the digital image, thereby capturing global context and cross-channel dependencies of the time series data. A pretrained large language model (LLM) generates semantic embeddings based on at least the time series embeddings and the image embeddings. At least one task head performs the task and generates output data for the task using the semantic embeddings. The task may include classification, anomaly detection, forecasting, imputation, clustering, etc.

## Description

### TECHNICAL FIELD

This disclosure relates generally to system forensics via time series analysis, computer vision, and natural language processing, and more particularly to performing a specific task via a machine learning framework that uses various modalities of time series information.

### BACKGROUND

Following the success of pretrained models in natural language processing (NLP) and computer vision (CV), there has been growing interest in adapting pretrained large language models (LLMs) for time series analysis. However, unlike NLP and CV, time series analysis still relies heavily on specialized approaches for each specific task, such as classification, anomaly detection, forecasting, and few-shot learning.

While meticulous preprocessing of time series data and specially designed prompts may enhance the zero-shot performance of LLMs on time series tasks, there is a semantic gap between natural language and numerical time series data that still presents a considerable challenge with respect to using LLMs for time series tasks. To address this modality gap, recent approaches have focused on fine-tuning specific components of LLMs or training additional modules to preprocess the time series data itself before feeding them to LLMs. However, these approaches may struggle to capture the global perspective of the time series data.

### SUMMARY

The following is a summary of certain embodiments described in detail below. The described aspects are presented merely to provide the reader with a brief summary of these certain embodiments and the description of these aspects is not intended to limit the scope of this disclosure. Indeed, this disclosure may encompass a variety of aspects that may not be explicitly set forth below.

According to at least one aspect, a computer-implemented method relates to performing a task in a time series domain. The method includes receiving time series data that include numerical data. The method includes generating a digital image that displays a set of graphical representations of the time series data. The method includes generating, via a tokenizer, time series embeddings using the time series data. The method includes generating, via an image encoder, image embeddings using pixels of the digital image. The method includes generating, via a pretrained large language model (LLM), semantic embeddings based on at least the time series embeddings and the image embeddings. The method includes performing, via at least one task head, the task and generating output data for the task using the semantic embeddings.

According to at least one aspect, a system includes one or more processors and one or more non-transitory computer memory. The one or more processors are in data communication with the one or more non-transitory computer memory. The one or more non-transitory computer memory have computer readable data stored thereon. The computer readable data include instructions that, when executed by one or more processors, causes the one or more processors to perform a method that relates to performing a task in a time series domain. The method includes receiving time series data that include numerical data. The method includes generating a digital image that displays a set of graphical representations of the time series data. The method includes generating, via a tokenizer, time series embeddings using the time series data. The method includes generating, via an image encoder, image embeddings using pixels of the digital image. The method includes generating, via a pretrained large language model (LLM), semantic embeddings based on at least the time series embeddings and the image embeddings. The method includes performing, via at least one task head, the task and generating output data for the task using the semantic embeddings.

These and other features, aspects, and advantages of the present invention are discussed in the following detailed description in accordance with the accompanying drawings throughout which like characters represent similar or like parts. Furthermore, the drawings are not necessarily to scale, as some features could be exaggerated or minimized to show details of particular components.

### BRIEF DESCRIPTION OF THE FIGURES

FIG. 1 is a diagram of an overview of an example of a multimodal large language model for time series (MLLM4TS) system according to an example embodiment of this disclosure.
FIG. 2 illustrates an example of a time series tokenizer according to an example embodiment of this disclosure.
FIG. 3 illustrates an example of a plot tokenizer according to an example embodiment of this disclosure.
FIG. 4 illustrates an example of a text tokenizer according to an example embodiment of this disclosure.
FIG. 5 illustrates a non-limiting example of a digital image that displays a set of graphical representations of multivariate time series data in a 2x2 grid format according to an example embodiment of this disclosure.
FIG. 6 illustrates a non-limiting example of a digital image that displays a set of graphical representations of multivariate time series data in a vertical stack according to an example embodiment of this disclosure.
FIG. 7 illustrates a non-limiting example of a digital image that displays a set of graphical representations of multivariate time series data in a horizontal stack according to an example embodiment of this disclosure.
FIG. 8 illustrates a non-limiting example of a digital image that displays a set of graphical representations of multivariate time series data in a 2x2 grid format in which each graphical representation is color-coded and plotted using a different color according to an example embodiment of this disclosure.
FIG. 9 is a diagram of an example of system that includes a MLLM4TS system according to at least one example embodiment of this disclosure.
FIG. 10 is a diagram of an example of an interaction between a computer-controlled machine and a control system according to at least one example embodiment of this disclosure.
FIG. 11 is a diagram of the control system of FIG. 10 that is configured to control a mobile machine, which is at least partially or fully autonomous, according to at least one example embodiment of this disclosure.
FIG. 12 is a diagram of the control system of FIG. 10 that is configured to control a manufacturing machine of a manufacturing system, such as part of a production line, according to at least one example embodiment of this disclosure.
FIG. 13 depicts a schematic diagram of the control system of FIG. 10 that is configured to control a monitoring system according to at least one example embodiment of this disclosure.
FIG. 14 depicts a schematic diagram of the control system of FIG. 10 that is configured to control a medical imaging system according to at least one example embodiment of this disclosure.

### DETAILED DESCRIPTION

The embodiments described herein, which have been shown and described by way of example, and many of their advantages will be understood by the foregoing description, and it will be apparent that various changes can be made in the form, construction, and arrangement of the components without departing from the disclosed subject matter or without sacrificing one or more of its advantages. Indeed, the described forms of these embodiments are merely explanatory. These embodiments are susceptible to various modifications and alternative forms, and the following claims are intended to encompass and include such changes and not be limited to the particular forms disclosed, but rather to cover all modifications, equivalents, and alternatives falling with the spirit and scope of this disclosure.

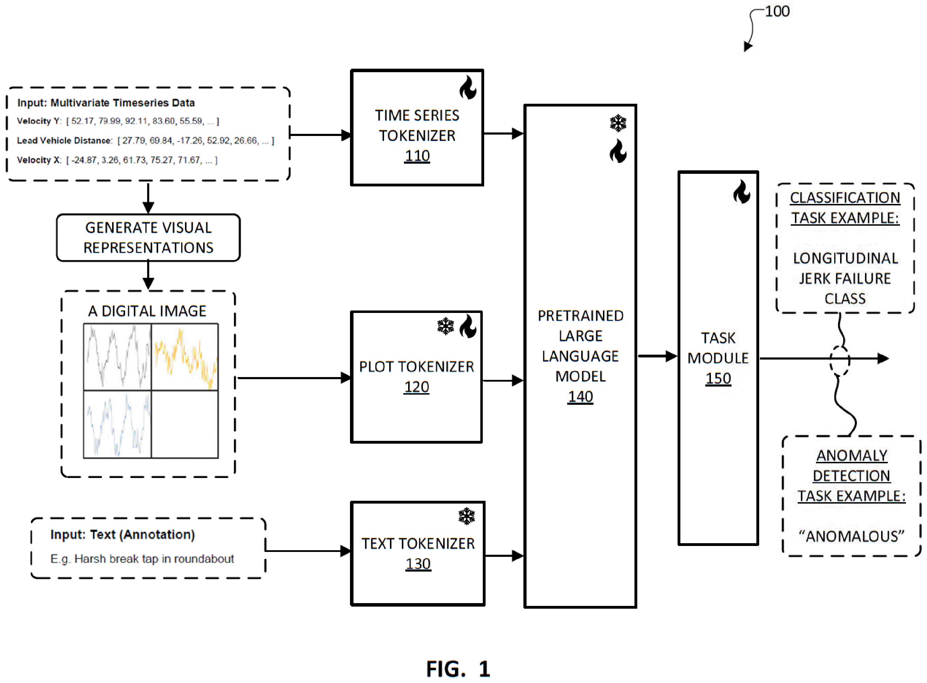

FIG. 1 illustrates an overview of a multimodal large language model for time series (MLLM4TS) system 100 that leverages NLP and CV foundation models for time series analysis effectively. This unified framework is configured to handle multivariate time series data (e.g., multi-channel time series data) and perform one or more time series tasks (e.g., classification, anomaly detection, forecasting, few-shot learning, imputation, clustering, etc.). The MLLM4TS system 100 includes two or more encoding branches (e.g., time series tokenizer 110, plot tokenizer 120, and text tokenizer 130), a pretrained large language model (LLM) 140, and a task module 150 with at least one output layer (e.g., at least one task head).

The MLLM4TS system 100 is trained using supervised learning for at least one specific task (e.g., classification, anomaly detection, etc.). In particular, the MLLM4TS system 100 includes a number of components (e.g., time series tokenizer 110, plot projector 126, and task module 150), as indicated by fire icons, that may update their parameters during this training process while also including a number of components (e.g., image encoder 124 and text encoder 132) that have their parameters frozen, as indicated by the snowflake icons, during this training process. Also, as shown in FIG. 1, the pretrained LLM 140 is efficiently finetuned, thereby being illustrated with both a fire icon and a snowflake icon. In this regard, the pretrained LLM 140 updates at least a subset of its parameters via efficient finetuning methods. With efficient finetuning, the pretrained LLM 140 benefits from not having to fully update all of its parameters, which may be costly, while still obtaining high-quality, task-specific results. For instance, an example of efficient finetuning of the pretrained LLM 140 includes finetuning the positional embeddings and normalization layer while keeping self-attention layers and Feedforward Neural Networks (FFN) frozen. Specifically, during this training process, the MLLM4TS system 100 is trained using at least one applicable supervised loss function pertaining to the specific task (e.g., as cross-entropy loss for classification, reconstruction loss for anomaly detection, etc.) in which parameters of predetermined components are updated.

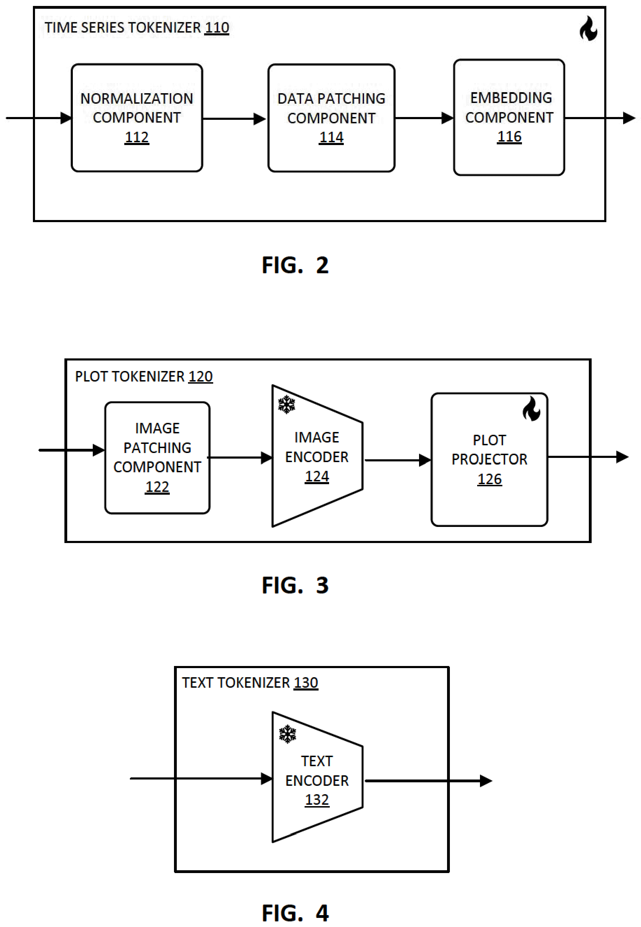

As shown in FIG. 1, the MLLM4TS system 100 includes a number of different encoding branches for encoding time series information of different modalities. Each encoding branch encodes time series information, which is captured in a particular format (e.g., numerical data, digital image, text data, etc.). Specifically, the MLLM4TS system 100 is configured to include at least a time series encoding branch and a vision encoding branch. For example, in FIG. 1, the MLLM4TS system 100 includes at least these two encoding branches (e.g., time series encoding branch and vision encoding branch), as well as at least one additional encoding branch (e.g., language encoding branch). That is, in the example shown in FIG. 1, the MLLM4TS system 100 includes three encoding branches: a time series encoding branch, a vision encoding branch, and a language encoding branch. In this regard, the MLLM4TS system 100 is configured to handle time series information across these three different modalities. Also, FIG. 2, FIG. 3, and FIG. 4 illustrate examples of these different encoding branches. The resulting embeddings from these three encoding branches are then transmitted to a pre-trained LLM 140, which serves as a central pivot of the MLLM4TS system 100.

FIG. 2 illustrates an example of a time series encoding branch according to an example embodiment. Encoding time series as a string of numerical digits separated by commas enables LLMs to achieve reasonable zero-shot forecasting performance. However, bridging the modality gap between time series data and natural language often requires more sophisticated embedding techniques for competitive performance. In recognition of this issue, the MLLM4TS system 100 includes a time series encoding branch that includes a time series tokenizer 110 with three components: a normalization component 112, a data patching component 114, and an embedding component 116. The time series tokenizer is jointly trained with the MLLM4TS system 100 during the training process using supervised learning for at least one task (e.g., classification, anomaly detection, etc.), as specified and selected based on the application.

As shown in FIG. 2, the normalization component 112 receives multivariate time series data. The normalization component 112 normalizes the multivariate time series data. As a non-limiting example, the normalization component 112 includes (i) Standardization, which transforms data to have zero mean and unit variance, (ii) Min-Max Normalization, which transforms data feature to [0,1]), or (iii) an applicable normalization module. For instance, referring to FIG. 1, as an example, the normalization component 112 normalizes the time series data of each channel. In FIG. 1, for example, the normalization component 112 is configured to (i) normalize the first velocity data, "Velocity Y" data, of the first channel (ii) normalize the "Lead Vehicle Distance" data of the second channel, and (iii) normalize the second velocity data, "Velocity X" data, of the third channel, respectively. Next, for local semantic information extraction, the time series tokenizer 110 employs patching, via the data patching component 114, after normalizing the time series data respectively for each channel.

The data patching component 114 receives the normalized time series data and generates data patches (e.g., segments) of normalized time series data. For example, the data patching component 114 generates a data patch by segmenting the normalized time series data based on a given patch size and a given stride parameter. For example, the data patching component 114 is configured to generate a set of data patches for the multivariate time series data. For convenience of explanation, as a non-limiting example, the data patching component 114 receives normalized multivariate time series data that includes (i) a sample of normalized time series data that includes [y₁, y₂, y₃, y₄, y₅, y₆, y₇, y₈, y₉] for the first channel, where yₜ represents normalized numerical data (e.g., velocity of a first vehicle), y, at time stamp t, (ii) a sample of normalized time series data that includes [d₁, d₂, d₃, d₄, d₅, d₆, d₇, d₈, d₉] for the second channel, where dₜ represents normalized numerical data (e.g., distance between the first vehicle and a second vehicle), d, at time stamp t, and (iii) a sample of normalized time series data that includes [x₁, x₂, x₃, x₄, x₅, x₆, x₇, x₈, x₉] for the third channel, where xₜ represents normalized numerical data (e.g., velocity of the second vehicle), x, at time stamp t. In this example, given a predetermined patch size and a predetermined stride (e.g., patch size = 6, stride = 3), the data patching component 114 generates data patches that include (i) a first data patch that includes [y₁, y₂, y₃, y₄, y₅, y₆], [d₁, d₂, d₃, d₄, d₅, d₆ ], and [x₄, x₂, x₃, x₄, x₅, x₆ ], (ii) a second data patch that includes [y₄, y₅, y₆, y₇, y₈, y₉], [d₄, d₅, d₆, d₇, d₈, d₉], and [x₄, x₅, x₆, x₇, x₈, x₉]. This patching technique enables the pretrained LLM 140 to analyze longer historical sequences of time series data with data patches while reducing information redundancy, given the same training time and a processing unit's memory (e.g., graphics processing unit (GPU) memory).

In addition, the time series tokenizer 110 includes an embedding component 116, which is configured to generate time series embeddings using the data patches (i.e., the tokens of time series data). The embedding component 116 includes an embedding process that bridges the domain gap between numerical time series data and textual language data. As an example, the time series tokenizer 110 includes a 1-dimensional (1D) convolution layer as the embedding component 116 for its simplicity and effectiveness. Specifically, the embedding component 116 is configured to transform the normalized multivariate time series data associated with a number of data patches into a single univariate time series, as well as generate time series embeddings that is compatible with the input requirements of the pretrained LLM 140. For instance, as a non-limiting example, for convenience of explanation, the embedding component 116 is configured to receive the first data patch having normalized multivariate time series that includes [y₁, y₂, y₃, y₄, y₅, y₆], [d₁, d₂, d₃, d₄, d₅, d₆ ], [x₁, x₂, x₃, x₄, x₅, x₆] and generate a single univariate time series that includes [y₁, y₂, y₃, y₄, y₅, y₆, d₁, d₂, d₃, d₄, d₅, d₆, x₁, x₂, x₃, x₄, x₅, x₆ ] via concatenation. Also, as another example, the embedding component 116 is configured to receive the second data patch having normalized multivariate time series that includes [y₄, y₅, y₆, y₇, y₈, y₉], [d₄, d₅, d₆, d₇, d₈, d₉], [x₄, x₅, x₆, x₇, x₈, x₉] and generate a single univariate time series that includes [y₄, y₅, y₆, y₇, y₈, y₉, d₄, d₅, d₆, d₇, d₈, dg, x₄, x₅, x₆, x₇, x₈, x₉] via concatenation. Each univariate time series is then processed by the 1D convolution layer, which generates time series embeddings and projects the time series embeddings into the dimensional space required by the pretrained LLM 140.

As discussed above, the time series encoding branch enables the pretrained LLM 140 to process time series data that includes numerical data (e.g., numerical values such as diagnostic data values as shown in FIG. 1). However, the time series encoding branch does not explicitly capture cross-channel dependencies. As a technical solution to this problem, the MLLM4TS system 100 is configured to at least generate, obtain, and/or receive a number of visual representations of the multivariate time series data and provide this information to the pretrained LLM 140 to capture cross-channel dependencies. In this regard, the multivariate time series data is generated into a set of visual representations, such as a set of graphical representations, such that cross-channel dependencies may be visually captured and provided to the pretrained LLM 140. For example, in FIG. 1, the MLLM4TS system 100 is configured to generate a line plot for each channel of the multivariate time series data. As shown in FIG. 1, the set of line plots (e.g., three line plots) are combined into a single digital image, which is input to the vision encoding branch. The vision encoding branch enables the pretrained LLM 140 to extract global context and cross-channel dependencies of the multivariate time series data, as these trends and cross-channel relationship are often more apparent in visual representations of the multivariate time series data. By providing this complementary visual information of the multivariate time series data, the pretrained LLM 140 is enabled to better process and learn the underlying structure and relationships among the different channels of the time series data.

FIG. 3 illustrates of an example of a vision encoding branch according to an example embodiment. In this example, the vision encoding branch includes an image patching component 122, a pretrained image encoder 124, and a plot projector 126. Alternatively, the vision encoding branch may include the pretrained image encoder 124 and the plot projector 126. More specifically, the image patching component 122 is configured to receive a single digital image with the set of line plots displayed thereon. The image patching component 122 is configured to generate a predetermined number of image patches using the digital image. Each image patch refers to a distinct portion (e.g., a distinct pixel region) of the digital image. As a non-limiting example, a particular patch may include at least a particular portion of a particular line plot.

The pretrained image encoder 124 is configured to receive the digital image itself or image patches of the digital image depending on whether or not the image patching component 122 is employed. If the image patching component 122 is not employed, then the pretrained image encoder 124 is configured to generate image embeddings using pixels of the digital image with the set of graphical representations. Alternatively, if the image patching component 122 is employed, then the pretrained image encoder 124 is configured to generate image embeddings using pixels of the image patches of the digital image with the set of graphical representations.

The image encoder 124 comprises an image encoding network of a pretrained vision language model (VLM) or an applicable pretrained image encoder. For example, the image encoder 124 includes an image encoder of Contrastive Language-Image Pre-Training (CLIP) model (e.g., ViT-L/14 CLIP model). In this regard, since the CLIP model is not pretrained on time series images and frozen during the training process (as indicated by the snowflake icon in FIG. 3), the MLLM4TS system 100 integrates efficient tuning techniques, such as BitFit, LoRA, or a similar tuning technique, within CLIP, thereby allowing the CLIP model to better accommodate the domain-specific characteristics of time series data while maintaining training efficiency.

Also, the vision encoding branch includes a plot projector 126. For example, in FIG. 3, the plot projector 126 includes a multi-layer perceptron (MLP), which is trained during the training process as indicated by the fire icon shown on the plot projector 126 of FIG. 3. The MLP serves as a vision tokenizer, which is configured to map the image features of the image embeddings into the language embedding space. The plot projector 126 is configured to at least (i) receive the image embeddings from the image encoder 124 of an output dimensionality and (ii) generate image embeddings of a proper dimensionality for the pretrained LLM 140 using the image embeddings of the output dimensionality from the image encoder 124.

As aforementioned, in addition to the time series encoding branch and the vision encoding branch, the MLLM4TS system 100 is configured to include one or more additional branches. The one or more additional branches are configured to supplement and enhance the multivariate time series information (e.g., time series embeddings and image embeddings), which are input to the pretrained LLM 140. The one or more additional branches may include a language encoding branch, an audio encoding branch, an applicable type of encoding branch for the downstream application, or any number and combination thereof.

Referring to FIG. 1, as an example, the MLLM4TS system 100 includes a language encoding branch as an additional encoding branch to the time series encoding branch and the vision encoding branch. The language encoding branch is configured to enhance the multivariate time series data with relevant contextual information. For example, the language encoding branch is configured to receive text data. The text data is associated with or corresponds to the multivariate time series data. With respect to the multivariate time series data, the text data may provide background information, contextual information, relevant information, or any number and combination thereof. The inclusion of text data, via the language encoding branch, guides the pretrained LLM 140 to perform a specific task more effectively.

The text data may include annotation data of the multivariate time series data, a description of the multivariate time series data, at least one task instruction with respect to the multivariate time series data, key statistics of the multivariate time series data in a language prompt format, other data relevant to the time series data, or any number and combination thereof. The text data may describe or relate to one or more of the visual representations (e.g., graphical representations such as line plots) of the multivariate time series data. The text data may relate to one, some, or all channels of the multivariate time series data. Additionally or alternatively, as an example, the text data may incorporate statistics into prompts. By incorporating easily computable statistics into prompts, the pretrained LLM 140 is enabled to conserve its capacity for capturing more complex patterns and relationships within the multivariate time series data. In this regard, the prompts are initialized using a text tokenizer 130, whereby its parameters are frozen (as indicated by the snowflake icon in FIG. 4) during training and employment. This approach allows for the enhancement of the capacity of the text encoder 132 without compromising on efficiency, thereby enabling the pretrained LLM 140 to adapt more effectively to the nuances of the text data.

FIG. 4 illustrates an example of a language encoding branch according to an example embodiment. In this example, the language encoding branch includes a text tokenizer 130, which is configured to receive text data as input. As an example, the text tokenizer 130 includes a text encoder 132. The text encoder 132 is configured to receive text data. The text encoder 132 is configured to generate text embeddings using the text data. For example, the text encoder 132 may include generative pre-trained transformer (GPT), bidirectional encoder representations from transformers (BERT), large language model meta Al (LLAMA), or an applicable text encoding network. The text embeddings are then transmitted to the pretrained LLM 140.

Referring to FIG. 1, the pretrained LLM 140 serves as a central pivot across the different modalities. In this example, the pretrained LLM 140 processes the various embeddings across different modalities. For example, the pretrained LLM 140 may include GPT2, LLAMA3, or an applicable pretrained language model. For example, in FIG. 1, the pretrained LLM 140 is configured to generate semantic embeddings using the time series embeddings, the image embeddings, and the text embeddings when the MLLM4TS system 100 includes the time series encoding branch, the vision encoding branch, and the language encoding branch. Alternatively, in another embodiment, the pretrained LLM 140 is configured to generate semantic embeddings using the time series embeddings and the image embeddings when the MLLM4TS system 100 includes the time series encoding branch and the vision encoding branch. In each of these examples, the pretrained LLM 140 is configured receive concatenated data as input, where the concatenated data is a concatenation of the various embeddings (e.g., time series embeddings, image embeddings, text embeddings, etc.), which are received from the various encoding branches.

As aforementioned, the pretrained LLM 140 generates semantic embeddings. Semantic embeddings are high-dimensional vector representations that capture the underlying meaning and relationships within data. The semantic embeddings are generated by the pretrained LLM 140 from the different encoding branches, thereby encoding temporal dependencies and structural patterns in a way that enables the task module 150 (e.g., one or more task heads) to process and interpret them efficiently. These semantic embeddings serve as a compact and information-rich representation of the input data (e.g., various modalities of time series information), thereby making them useful for at least one task (e.g., classification, anomaly detection, clustering, etc.). The MLLM4TS system 100 leverages the pretrained LLM 140 to generate semantic embeddings that encode contextual and relationship information from the various modalities of the multivariate time series data (e.g., multi-channel time series data), thereby facilitating improved generalization and transfer learning. The semantic embeddings are provided in a structured feature space, where more similar patterns or sequences are mapped closer to each other and where more dissimilar patterns are mapped farther away from each other, thereby enabling the pretrained LLM 140 to recognize trends, anomalies, and correlations across different time series datasets.

Also, given the large number of semantic embeddings (or output tokens), which are generated by the pretrained LLM 140, the MLLM4TS system 100 would require an excessively large prediction head to directly flatten all of the semantic embeddings (or output tokens) of the pretrained LLM 140 for prediction relating to a specific task. In recognition of this technical issue and to improve efficiency, the MLLM4TS system 100 applies max or average pooling across the semantic embeddings (or the output tokens), which are output from the pretrained LLM 140, to consolidate them into a single token, which is then linearly projected to each task head of the task module 150 to generate output data or a final prediction for that given task.

In addition, as shown in FIG. 1, the MLLM4TS system 100 includes a task module 150 with at least one output layer (e.g., at least one task head). Each task head may include one or more artificial neural network layers. A task head is configured to perform a specific task in the time series domain using the semantic embeddings and generate output data based on the specific task. The task module 150 is configured to include one or more task heads based on the one or more specific tasks of a given application. For example, the task module 150 may include a classification head that performs a classification task. The task module 150 may include a forecasting head that performs a forecasting task. Also, few-shot learning or zero-shot learning may be applied, for example, to the task head (e.g., classification head, forecasting head, etc.). The task module 150 may include an anomaly detection head that performs an anomaly detection task. The task module 150 may include an imputation task head that performs an imputation task. The task module 150 may include a clustering head that performs a clustering task. In this regard, the MLLM4TS system 100 includes a task module 150 that is configured to the one or more specific tasks of a given application.

Furthermore, for illustrative and explanatory purposes, FIG. 1 further illustrates a non-limiting data example with respect to the MLLM4TS system 100. The MLLM4TS system 100 processes multivariate time series data. The multivariate time series data comprises multi-channel time series data. For instance, in FIG. 1, the MLLM4TS system 100 receives multivariate time series data (e.g., numerical data with respect to time) that includes (i) a first channel that includes velocity data of a first vehicle with respect to time, (ii) a second channel that includes lead vehicle distance of the first vehicle relative to a second vehicle with respect to time, and (iii) a third channel that includes velocity data of the second vehicle with respect to time. Also, the MLLM4TS system 100 generates a digital image that includes graphs (e.g., line plots) of this multivariate time series data. For example, as shown in FIG. 1, the MLLM4TS system 100 generates (i) a first line plot of the velocity data of the first vehicle with respect to time, (ii) a second line plot of the lead vehicle distance with respect to time, and (iii) a third line plot of the velocity data of the second vehicle. The first line plot relates to the first channel of time series data. The second line plot relates to the second channel of time series data. The third line plot corresponds to the third channel of time series data. Also, in the example shown in FIG. 1, the digital image displays the three line plots in a 2x2 grid format with (i) the first line plot illustrated in a first color and positioned in a first row and first column of the 2x2 grid, (ii) the second line plot illustrated in a second color and positioned in a first row and second column of the 2x2 grid, and (iii) the third line plot illustrated in a third color and positioned in a second row and first column of the 2x2 grid, and (iv) a blank space positioned in a second row and second column of the 2x2 grid. In this regard, the blank space indicates that the multivariate time series data does not include a fourth channel and/or time series data of a fourth channel. In the example shown in FIG. 1, the MLLM4TS system 100 also receives text data, which relates to the time series data. In this case, the text data includes an annotation that indicates that the time series data corresponds to a "harsh break tap in roundabout," thereby providing contextual information relating to the multivariate time series data (e.g., numerical data) and the set of graphical representations of the digital image.

Also, with respect to the non-limiting data example shown in FIG. 1, the time series tokenizer 110 generates time series embeddings based on the time series data. The plot tokenizer 120 generates image embeddings based on pixels of image patches of the digital image. The text tokenizer 130 generates text embeddings based on the text data. Concatenated data is generated by concatenating these multimodal embeddings (e.g., time series embeddings, image embeddings, and text embeddings). The pretrained LLM 140 receives the concatenated data as input and generates semantic embeddings as output based on the concatenated data. In this particular example, the task module 150 includes a classification head. The classification head is configured to generate class data as output data for the classification task based on the semantic embeddings. In this non-limiting example, the classification head predicts that the semantic embeddings belong to the "longitudinal jerk failure" class from among a number of classes (e.g., various failure classes). Additionally or alternatively, the task module 150 includes an anomaly detection head, which is configured to categorize the semantic embeddings, associated with the various modalities of multi-channel time series information (e.g., time series data, digital image with graphical representations of time series data, and text data with context of time series data), and generate output data indicating that the multi-channel time series information is either anomalous or non-anomalous (i.e., normal). For instance, in FIG. 1, the anomaly detection head determines that the multi-channel time series information is "anomalous" and generates output indicative of this anomalous detection. As demonstrated by this non-limiting data example, the MLLM4TS system 100 is advantageous in being able to perform at least one specific task based on multimodal time series information with both local and global perspectives of multi-channel time series data.

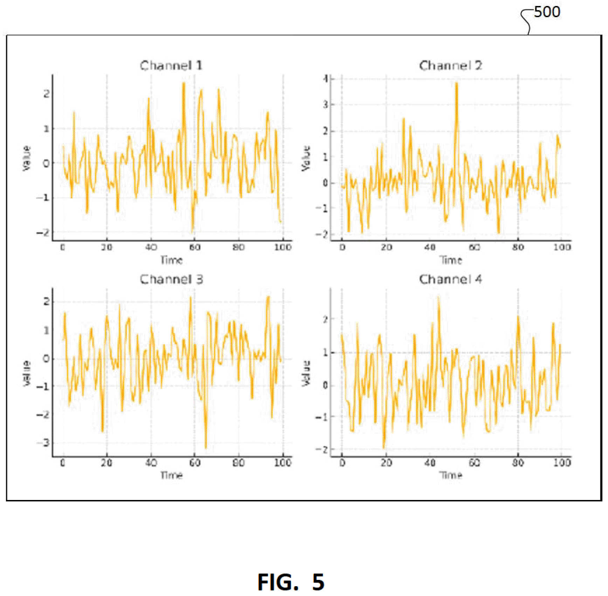

FIG. 5, FIG. 6, FIG. 7, and FIG. 8 illustrate other non-limiting examples of various digital images, which may be generated based on other non-limiting examples of multivariate time series data. The plot tokenizer 170 is not limited to processing the specific versions and layouts of the visual representations presented in FIG. 1, FIG. 5, FIG. 6, FIG. 7, and FIG. 8, but may include other visual presentations as deemed applicable for the multivariate time series data based on a number of factors (e.g., type of time series data, number of channels, specific application, the specific task, etc.). As aforementioned the plot tokenizer 120 is configured to receive at least one digital image, which displays visual representations (e.g., graphical representations) of the multivariate time series data. The multivariate time series data may include or correspond to a given number of channels for a given application. For instance, in the example shown in FIG. 1, the multivariate time series data includes a first set of diagnostic data for a first channel, a second set of diagnostic data for a second channel, and a third set of diagnostic data for a third channel. As other non-limiting examples, each of FIG. 5, FIG. 6, FIG. 7, and FIG. 8 illustrates a digital image, which is generated as input to the vision encoding branch. Each digital image includes four graphical representations of various time series data for four channels. In each of these examples, for a given channel, the time series data is graphically represented as a graph (e.g., line plot). Each line plot is plotted with respect to an x-axis, which represents time, and a y-axis, which represents numerical data (e.g., numerical value such as velocity, distance, diagnostic data, sensor data, etc.).

In each of these examples, the four line plots for the four channels are displayed together in a single digital image (or a common digital image) comprising pixels. Each example presents a different version (e.g., layout, form, orientation, color, etc.) in which the line plots are displayed in the digital image for processing by the plot tokenizer 120. For example, FIG. 5 illustrates an example of a digital image 500 in which the four line plots are presented in a 2x2 grid format. Specifically, the digital image 500 includes (i) a first line plot for time series data of a first channel, the first line plot being positioned in a first row and first column of the grid, (ii) a second line plot for time series data of a second channel, the second line plot being positioned in a first row and second column of the grid, (iii) a third line plot for time series data of a third channel, the third line plot being positioned in a second row and first column of the grid, and (iv) a fourth line plot for time series data of a fourth channel, the fourth line plot being positioned in a second row and second column of the grid.

Also, in FIG. 5, the digital image 500 displays each line plot with the x-axis (e.g., time data) extending parallel to a top/bottom edge of the digital image 500 and the y-axis (e.g., numerical data) extending parallel to a right/left edge of the digital image 500. Additionally, in FIG. 5, the four line plots are displayed with the same color. Meanwhile, in FIG. 5, the other information (e.g., y-axis information, x-axis information, plot labels, etc.) are displayed with a different color than the four line plots. For instance, in FIG. 5, each of the line plots are displayed in a particular color (e.g., orange or another selected color) while the other information (e.g., y-axis information, x-axis information, and labels) are displayed in a different color (e.g., black or another selected color). However, in other examples, this other information and the line plots may be in the same color depending on the given application.

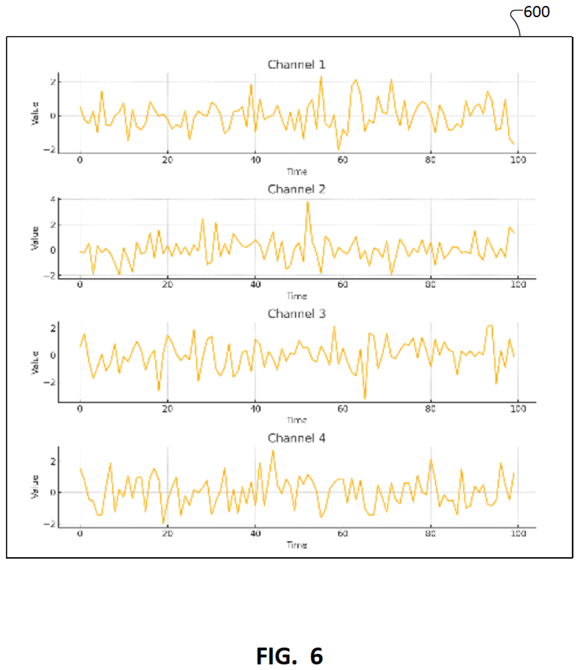

As another example, FIG. 6 illustrates an example of a digital image 600 in which the four line plots are displayed in a vertical stack with respect to a portrait orientation. As shown in FIG. 6, the digital image 600 displays a stack in which a top of the stack is positioned at a top portion of the digital image 600 and a bottom of the stack is positioned at a bottom portion of the digital image 600. In this case, the digital image 600 displays a vertical stack with the first line plot for the first channel, the second line plot for the second channel, the third line plot for the third channel, and the fourth line plot for the fourth channel arranged in this order with the first line plot being at the top of the stack and the fourth line plot being at the bottom of the stack. Alternatively, the digital image may display a vertical stack with the fourth line plot for the fourth channel, the third line plot for the third channel, the second line plot for the second channel, and the first line plot for the first channel arranged in this order with the fourth line plot being at the top of the stack and the first line plot being at the bottom of the stack. Also, in each of these cases, the x-axis (e.g., time data) extends parallel to a top/bottom edge of the digital image 600 and the y-axis (e.g., numerical data) extends parallel to a right/left edge of the digital image 600. Additionally, in FIG. 6, the four line plots are displayed with the same color. Meanwhile, in FIG. 6, the other information (e.g., y-axis information, x-axis information, plot labels, etc.) are displayed with a different color than the four line plots. For instance, in FIG. 6, each of the line plots are displayed in a particular color (e.g., orange or another selected color) while the other information (e.g., y-axis information, x-axis information, and labels) are displayed in a different color (e.g., black or another selected color). However, in other examples, this other information and the line plots may be in the same color depending on the given application.

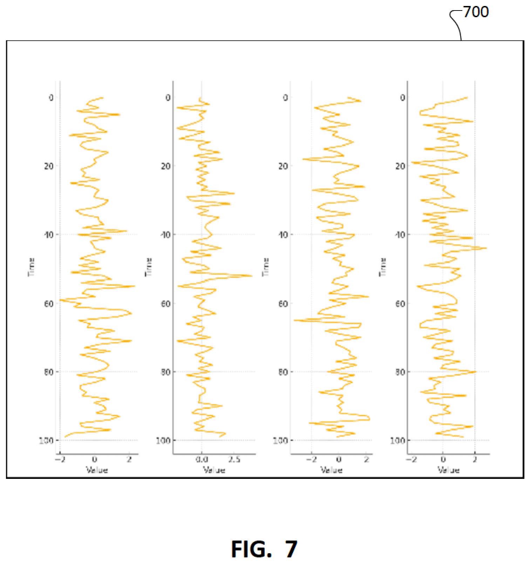

As an example, FIG. 7 illustrates an example of a digital image 700 in which the four line plots are displayed in a horizontal stack with respect to a portrait orientation. The digital image 700 includes four line plots in a stack arrangement that is orientated horizontally in portrait view. Specifically, in this horizontal stack arrangement, the x-axis (e.g., time data) is parallel to a left/right edge of the digital image 700 and the y-axis (e.g., numerical data) is parallel to a top/bottom edge of the digital image 700. In FIG. 7, the line plots are oriented such that the x-axis (e.g., time) increases in a direction from the top of the digital image 700 to the bottom of the digital image 700. Alternatively, the line plots may be illustrated such that the x-axis (e.g., time) increases in a direction from the bottom of the page to the top of the page. Also, in FIG. 7, the line plots are oriented in the horizontal stack such that the first line plot of the first channel, the second line plot of the second channel, the third line plot of the third channel, and the fourth line plot of the fourth channel are stacked in this order from the left side of the digital image 700 to the right side of the digital image 700. Alternatively, the line plots may be oriented in the stack such that the fourth line plot of the fourth channel, the third line plot of the third channel, the second line plot of the second channel, and the first line plot of the first channel are stacked in this order from the left side of the digital image to the right side of the digital image. Additionally, in FIG. 7, the four line plots are displayed with the same color. Meanwhile, in FIG. 7, the other information (e.g., y-axis information, x-axis information, plot labels, etc.) are displayed with a different color than the four line plots. For instance, in FIG. 7, each of the line plots are displayed in a particular color (e.g., orange or another selected color) while the other information (e.g., y-axis information, x-axis information, and labels) are displayed in a different color (e.g., black or another selected color). However, in other examples, this other information and the line plots may be in the same color depending on the given application.

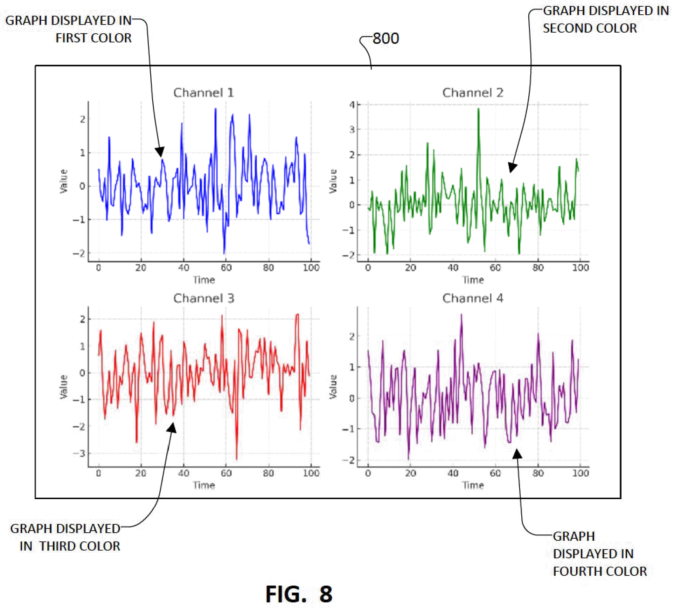

FIG. 8 illustrates another example of a digital image 800 in which the four line plots are displayed in a 2x2 grid format similar to the digital image 500 of FIG. 5. However, the digital image 800 of FIG. 8 is different from the digital image 500 of FIG. 5 in that the digital image 800 includes color-coded line plots such that the first line plot of the first channel is a first color (e.g., blue or another selected color), the second line plot of the second channel is a second color (e.g., green or another selected color), the third line plot of the third channel is a third color (e.g., red or another selected color), and the fourth line plot of the fourth channel is a fourth color (e.g., purple or another selected color). As demonstrated by this example, each line plot may be displayed in a selected color via a color-coding scheme. Meanwhile, in FIG. 8, the other information (e.g., y-axis information, x-axis information, labels, etc.) are displayed with a different color than the colors of the four line plots. For instance, in FIG. 8, each of the line plots are displayed in a selected color (e.g., red color, blue color, green color, and purple color) of the color-coding scheme while the other information (e.g., y-axis information, x-axis information, and labels) are displayed in a different color (e.g., black or another selected color). However, in other examples, there may be variances in the color coding of the line plots and other information depending on the given application. For example, one or more of the line plots may be color-coded in one or more particular colors while one or more of the other line plots may be color-coded in one or more other particular colors. Also, in FIG. 8, the digital image 800 displays each line plot with the x-axis (e.g., time data) extending parallel to a top/bottom edge of the digital image 800 and the y-axis (e.g., numerical data) extending parallel to a right/left edge of the digital image 800.

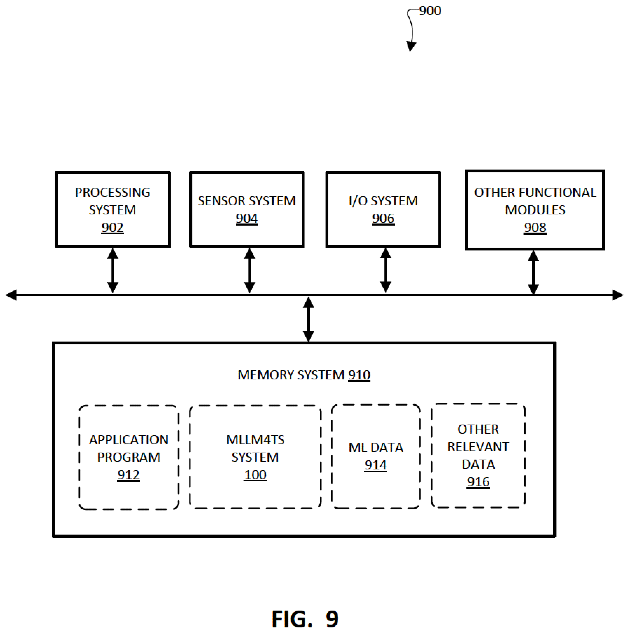

FIG. 9 is a block diagram of an example of a system 900 that includes the MLLM4TS system 100. The system 900 includes at least a processing system 902. The processing system 902 includes at least one processing device. For example, the processing system 902 may include an electronic processor, a central processing unit (CPU), a graphics processing unit (GPU), a tensor processing unit (TPU), a microprocessor, a field-programmable gate array (FPGA), an application-specific integrated circuit (ASIC), any processing technology, or any number and combination thereof. The processing system 902 is operable to provide the functionality as described herein.

The system 900 includes at least one sensor system 904. The sensor system 904 includes one or more sensors (e.g., speed sensor, radar, infrared sensor, image sensor, GPS sensor, audio sensor, motion sensor, etc.). In particular, the sensor system 904 includes one or more sensors that provides multivariate time series data. The sensor system 904 is operable to communicate with one or more other components (e.g., processing system 902 and memory system 910) of the system 900. For example, the sensor system 904 may provide sensor data (e.g., time series data), which is then processed by the processing system 902. The sensor system 904 is local, remote, or a combination thereof (e.g., partly local and partly remote) with respect to one or more components of the system 900. Upon receiving the sensor data (e.g., multi-channel time series data ), the processing system 902 is configured to process this sensor data (in connection with the application program 912, the MLLM4TS system 100, the machine learning (ML) data 914, the other relevant data 916, or any number and combination thereof.

The system 900 includes a memory system 910, which is operatively connected to the processing system 902. In this regard, the processing system 902 is in data communication with the memory system 910. The memory system 910 includes at least one non-transitory computer readable storage medium, which is configured to store and provide access to various data to enable at least the processing system 902 to perform the operations and functionality, as disclosed herein. The memory system 910 comprises a single memory device or a plurality of memory devices. The memory system 910 may include electrical, electronic, magnetic, optical, semiconductor, electromagnetic, or any suitable storage technology. For instance, the memory system 910 may include random access memory (RAM), read only memory (ROM), flash memory, a disk drive, a memory card, an optical storage device, a magnetic storage device, a memory module, any suitable type of memory device, or any number and combination thereof. The memory system 910 includes computer readable data that, when executed by the processing system 902, is configured to perform at least the functions disclosed in this disclosure. The computer readable data may include instructions, code, routines, various related data, software technology, or any number and combination thereof.

The memory system 910 includes computer readable data for the application program 912. The application program 912 is configured to perform the functions discussed in this disclosure with respect to the MLLM4TS system 100. For example, the application program 912 may relate processes associated with the MLLM4TS system 100 with respect to training, tuning, testing, validating, deploying, employing, or any number and combination thereof. The application program 912 may also be configured to apply the output data (e.g., class data such as "longitudinal jerk failure class" or "anomalous" label) of the MLLM4TS system 100 to a given application and/or at least one downstream technical system.

Also, the memory system 910 includes computer readable data for the MLLM4TS system 100, which is configured to perform the operations and functions as discussed, for example, with respect to FIG. 1, FIG. 2, FIG. 3, and FIG. 4 of this disclosure. The memory system 910 includes ML data 914, which comprises various data (e.g., parameters, sensor data, time series data, digital images, text data, loss data, training data, channel data, etc.) that relates to various aspects (e.g., training, tuning, finetuning, testing, validating, deploying, employing, etc.) of one or more parts of the MLLM4TS system 100, as described in this disclosure. The memory system 910 includes computer readable data for the other relevant data 916. The other relevant data 916 provides various data (e.g., operating system, etc.), which enables the system 900 and/or the processing system 902 to perform the functions as discussed herein. In addition, the system 900 may include one or more I/O devices 906 (e.g., display device, microphone, speaker, etc.) to receive input and/or provide output to one or more components of the system 900.

In addition, the system 900 includes other functional modules 908, such as any appropriate hardware, software, or combination thereof that assist with or contribute to the functioning of the system 900 and the MLLM4TS system 100. For example, the other functional modules 908 include communication technology (e.g., wired communication technology, wireless communication technology, or a combination thereof) that enables components of the system 900 to communicate with each other and/or one or more other computing devices via at least one communication network. The one or more other computing devices (not shown) may include a mobile communication device, smart phone, laptop, tablet, server, a cloud computing system, etc.

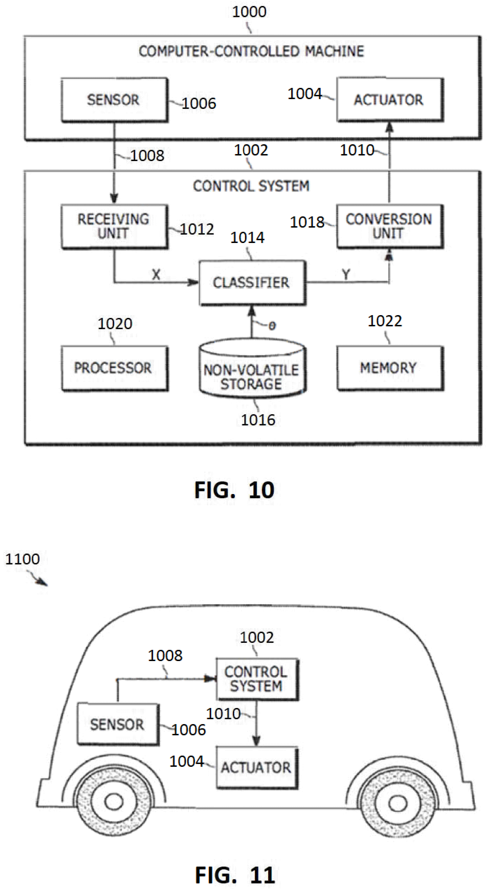

FIG. 10 depicts a schematic diagram of an interaction between computer-controlled machine 1000 and control system 1002 according to another example embodiment. Computer-controlled machine 1000 includes actuator 1004 and sensor 1006. Actuator 1004 may include one or more actuators and sensor 1006 may include one or more sensors. Sensor 1006 is configured to sense a condition of computer-controlled machine 1000. Sensor 1006 may be configured to encode the sensed condition into sensor signals 1008 and to transmit sensor signals 1008 to control system 1002. A non-limiting example of sensor 1006 includes video, radar, LiDAR, an ultrasonic sensor, an image sensor, an audio sensor, a motion sensor, etc.

Control system 1002 is configured to receive sensor signals 1008 from computer-controlled machine 1000. As set forth below, control system 1002 may be further configured to compute actuator control commands 1010 depending on the sensor signals and to transmit actuator control commands 1010 to actuator 1004 of computer-controlled machine 1000.

As shown in FIG. 10, control system 1002 includes receiving unit 1012. Receiving unit 1012 may be configured to receive sensor signals 1008 from sensor 1006 and to transform sensor signals 1008 into input signals x. In an alternative embodiment, sensor signals 1008 are received directly as input signals x without receiving unit 1012. Each input signal x may be a portion of each sensor signal 1008. Receiving unit 1012 may be configured to process each sensor signal 1008 to product each input signal x. Input signal x may include data corresponding to a digital image recorded by sensor 1006.

Control system 1002 includes classifier 1014. In this example, the classifier 1014 comprises the MLLM4TS system 100 with a task module 150 that includes at least a classification head as the task head. The classifier 1014 may be configured to classify input signals x into one or more labels using ML algorithms via the MLLM4TS system 100. Classifier 1014 is configured to be parametrized by parameters θ. Parameters θ may be stored in and provided by non-volatile storage 1016. Classifier 1014 is configured to determine output signals y from input signals x. Each output signal y includes information that assigns one or more labels to each input signal x. Classifier 1014 may transmit output signals y to conversion unit 1018. Conversion unit 1018 is configured to covert output signals y into actuator control commands 1010. Control system 1002 is configured to transmit actuator control commands 1010 to actuator 1004, which is configured to actuate computer-controlled machine 1000 in response to actuator control commands 1010. In some embodiments, actuator 1004 is configured to actuate computer-controlled machine 1000 based directly on output signals y.

Upon receipt of actuator control commands 1010 by actuator 1004, actuator 1004 is configured to execute an action corresponding to the related actuator control command 1010. Actuator 1004 may include a control logic configured to transform actuator control commands 1010 into a second actuator control command, which is utilized to control actuator 1004. In one or more embodiments, actuator control commands 1010 may be utilized to control a display instead of or in addition to an actuator.

In some embodiments, control system 1002 includes sensor 1006 instead of or in addition to computer-controlled machine 1000 including sensor 1006. Control system 1002 may also include actuator 1004 instead of or in addition to computer-controlled machine 1000 including actuator 1004. As shown in FIG. 10, control system 1002 also includes processor 1020 and memory 1022. Processor 1020 may include one or more processors. Memory 1022 may include one or more non-transitory memory devices. The classifier 1014 of one or more embodiments may be implemented by control system 1002, which includes non-volatile storage 1016, processor 1020, and memory 1022.

Non-volatile storage 1016 may include one or more persistent data storage devices such as a hard drive, optical drive, tape drive, non-volatile solid-state device, cloud storage or any other device capable of persistently storing information. Processor 1020 may include one or more devices selected from high-performance computing (HPC) systems including high-performance cores, graphics processing units, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 1022. Memory 1022 may include a single memory device or a number of memory devices including, but not limited to, RAM, ROM, volatile memory, non-volatile memory, static random access memory (SRAM), dynamic random access memory (DRAM), flash memory, cache memory, or any other device capable of storing information.

Processor 1020 is configured to read into memory 1022 and execute computer-executable instructions residing in non-volatile storage 1016 and embodying one or more ML algorithms and/or methodologies of one or more embodiments. Non-volatile storage 1016 may include one or more operating systems and applications. Non-volatile storage 1016 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 1020, the computer-executable instructions of non-volatile storage 1016 may cause control system 1002 to implement one or more of the ML algorithms and/or methodologies to employ the classifier 1014 as disclosed herein. Non-volatile storage 1016 may also include ML data (including model parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments. Furthermore, the processes, methods, or algorithms can be embodied in whole or in part using suitable hardware components, such as ASICs, FPGAs, state machines, controllers or other hardware components or devices, or a combination of hardware, software and firmware components.

FIG. 11 depicts a schematic diagram of control system 1002 configured to control vehicle 1100, which may be at least a partially autonomous vehicle or a partially autonomous robot. Vehicle 1100 includes actuator 1004 and sensor 1006. Sensor 1006 may include one or more video sensors, cameras, radar sensors, ultrasonic sensors, LiDAR sensors, and/or position sensors (e.g. Global Positioning System). One or more of the one or more specific sensors may be integrated into vehicle 1100. Alternatively or in addition to one or more specific sensors identified above, sensor 1006 may include a software module configured to, upon execution, determine a state of actuator 1004. One non-limiting example of a software module includes a weather information software module configured to determine a present or future state of the weather proximate to the vehicle 1100 or at another location.

The classifier 1014 of control system 1002 of vehicle 1100 may be configured to classify objects in the vicinity of vehicle 1100 dependent on input signals x. In such an embodiment, output signal y may include information classifying or characterizing objects in a vicinity of the vehicle 1100. Actuator control command 1010 may be determined in accordance with this information. The actuator control command 1010 may be used to navigate the vehicle 1100 and avoid collisions based on the classifications provided by classifier 1014.

In some embodiments, the vehicle 1100 is an at least partially autonomous vehicle or a fully autonomous vehicle. The actuator 1004 may be embodied in a brake, a propulsion system, an engine, a drivetrain, a steering of vehicle 1100, etc. Actuator control commands 1010 may be determined such that actuator 1004 is controlled such that vehicle 1100 avoids collisions with detected objects. Detected objects may also be identified and classified according to what the classifier 1014 deems them most likely to be, such as pedestrians, trees, any suitable labels, etc. The actuator control commands 1010 may be determined depending on the classification of objects from digital images generated via the sensors 1006.

In some embodiments where vehicle 1100 is at least a partially autonomous robot, vehicle 1100 may be a mobile robot that is configured to carry out one or more functions, such as flying, swimming, diving, stepping, or another mobile action. The mobile robot may be a lawn mower, which is at least partially autonomous, or a cleaning robot, which is at least partially autonomous. In such embodiments, the actuator control command 1010 may be determined such that a propulsion unit, steering unit and/or brake unit of the mobile robot may be controlled such that the mobile robot may navigate and/or avoid collisions with objects according to classifications provided by the classifier 1014.

In some embodiments, vehicle 1100 is an at least partially autonomous robot in the form of a gardening robot. In such embodiment, vehicle 1100 may use an optical sensor as sensor 1006 to determine a state of plants in an environment proximate to vehicle 1100. Actuator 1004 may be a nozzle configured to spray chemicals. Depending on an identified species and/or an identified state of the plants via the classifier 1014, actuator control command 1010 may be determined to cause actuator 1004 to spray the plants with a suitable quantity of suitable chemicals.

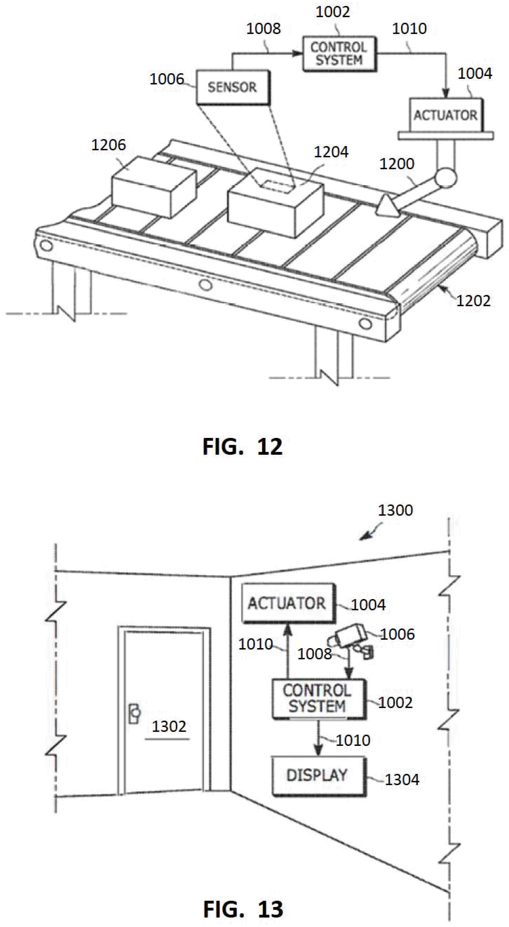

FIG. 12 depicts a schematic diagram of control system 1002 configured to control a system 1200 (e.g., manufacturing machine), which may include a punch cutter, a cutter, a gun drill, a manufacturing tool, or the like, of a manufacturing system 1202, such as part of a production line. Control system 1002 may be configured to control actuator 1004, which is configured to control the system 1200 (e.g., manufacturing machine).

Sensor 1006 of the system 1200 (e.g., manufacturing machine) may be an optical sensor configured to capture one or objects associated with manufacturing a product 1204. Classifier 1014 may be configured to determine from one or more of the captured properties. Actuator 1004 may be configured to control the system 1200 (e.g., manufacturing machine) depending on the determined state of a manufacturing of the product 1204 for a subsequent manufacturing step of manufacturing the product 1204. The actuator 1004 may be configured to control functions of the system 1200 (e.g., manufacturing machine) on a subsequent state of the product 1206 of system 1200 (e.g., manufacturing machine) depending on the determined state of the product 1204.

FIG. 13 is a diagram of control system 1002 configured to control monitoring system 1300 (e.g., a security system). Monitoring system 1300 may be configured to physically control access through door 1302. Sensor 1006 may be configured to detect a scene that is relevant in deciding whether access is granted. Sensor 1006 may be an optical sensor configured to generate and transmit image and/or video data. Such image and/or video data may be used by control system 1002 to detect and classify an object (e.g., human, animal, bicycle, weapon, trash can, etc.) that may be in a sensing region of the sensor 1006 near the door 1302.

In addition, the control system 1002 may be configured to generate an actuator control command 1010 in response to the classification of one or more objects of the image and/or video data via the classifier 1014. Control system 1002 is configured to transmit the actuator control command 1010 to actuator 1004. In this embodiment, the actuator 1004 is configured to lock or unlock door 1302 in response to the actuator control command 1010. In some embodiments, a non-physical, logical access control is also possible.

Monitoring system 1300 may also be a surveillance system. In such an embodiment, the sensor 1006 includes at least an image sensor or camera configured to detect a scene that is under surveillance and the control system 1002 is configured to control display 1304. Classifier 1014 is configured to determine a classification of a scene, e.g. whether the scene detected by sensor 1006 is suspicious or not suspicious. Control system 1002 is configured to transmit an actuator control command 1010 to display 1304 in response to the classification. Display 1304 may be configured to adjust the displayed content in response to the actuator control command 1010. For instance, display 1304 may highlight an object that is deemed suspicious by classifier 1014.

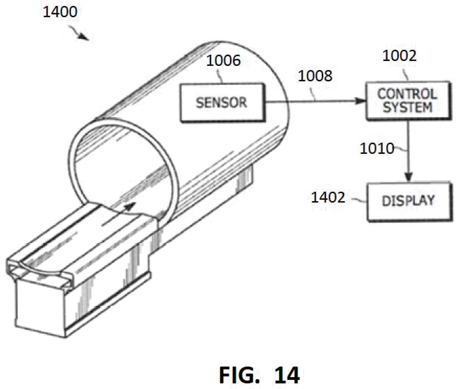

FIG. 14 depicts a schematic diagram of control system 1002 configured to control imaging system 1400, for example a magnetic resonance imaging (MRI) apparatus, x-ray imaging apparatus or ultrasonic apparatus. Sensor 1006 may, for example, be an imaging sensor. Classifier 1014 may be configured to determine a classification of all or part of the sensed image. The actuator control command 1010 is selected based on the classification obtained from the classifier 1014. For example, classifier 1014 may interpret a region of a digital image to be either anomalous or non-anomalous. In this case, the actuator control command 1010 may be selected to cause display 1402 to display the digital image and highlight the potentially anomalous region via the classification provided by the classifier 1014.

As described in this disclosure, the embodiments include a number of advantageous features, as well benefits. For example, each embodiment includes the MLLM4TS system 100, which is configured to perform a specific task relating to systems forensics via a machine learning framework that uses various modalities of time series information. Moreover, the MLLM4TS system 100 is configured to handle multi-channel time series data when performing at least one specific task. In addition, the MLLM4TS system 100 provides a unified framework, which leverages multimodal foundation models for time series analysis. In an example embodiment, the MLLM4TS system 100 includes three encoding branches, such as a time series encoding branch, a vision encoding branch, and a language encoding branch. Specifically, the MLLM4TS system 100 is configured to segment numerical time series data into patches and generate time series embeddings in a channel-independent manner to preserve local semantic information. Also, the MLLM4TS system 100 converts the time series data into graphical representations (e.g., line plots) to capture global context and cross-channel dependencies. The MLLM4TS system 100 is configured to incorporate the graphical representations of time series data of a plurality of channels into a single digital image. The digital image may display the graphical representations with a color-coding scheme, thereby providing additional visual information that results in improved performance of a given task. The MLLM4TS system 100 includes at least a vision foundation model (e.g., image encoder 124) to generate image embeddings based on pixels of that single digital image. Also, MLLM4TS system 100 is configured to enrich the time series data with relevant descriptions, task instructions, key statistics in a language prompt format, any relevant text data, or any number or combination thereof. Furthermore, the MLLM4TS system 100 employs a pre-trained LLM 140 as a central pivot to process concantanted data of the resulting embeddings of these various modalities as for the specific task. The MLLM4TS system 100 is advantageous in being a unified framework, which is configurable to handle multimodal time series information of multiple channels and perform one or more diverse tasks in the time series domain.

Furthermore, the above description is intended to be illustrative, and not restrictive, and provided in the context of a particular application and its requirements. Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the general principles defined herein may be applied to other embodiments and applications without departing from the spirit and scope of the described embodiments, and the true scope of the embodiments and/or methods of the present invention are not limited to the embodiments shown and described, since various modifications will become apparent to the skilled practitioner upon a study of the drawings, specification, and following claims. Additionally, or alternatively, components and functionality may be separated or combined differently than in the manner of the various described embodiments and may be described using different terminology. These and other variations, modifications, additions, and improvements may fall within the scope of the disclosure as defined in the claims that follow.

## Claims

1. A computer-implemented method for performing a task in a time series domain, the computer-implemented method comprising:
receiving time series data that include numerical data;
generating a digital image that displays a set of graphical representations of the time series data;
generating, via a tokenizer, time series embeddings using the time series data;
generating, via an image encoder, image embeddings using pixels of the digital image;
generating, via a pretrained large language model (LLM), semantic embeddings based on at least the time series embeddings and the image embeddings; and
performing, via at least one task head, the task and generating output data for the task using the semantic embeddings.

2. The computer-implemented method of claim 1, further comprising:
receiving text data that provide context for the time series data;
generating, via a pretrained text encoder, text embeddings using the text data; and
generating concatenated data by concatenating the time series embeddings, the image embeddings, and the text embeddings,
wherein the pretrained LLM uses the concatenated data to generate the semantic embeddings.

3. The computer-implemented method of claim 1, wherein:
the time series data include a set of channels with diagnostic data; and
the set of graphical representations include at least one line plot for each channel of diagnostic data.

4. The computer-implemented method of claim 1, further comprising:
generating image patches of the digital image,
wherein the image encoder receives the image patches as input and generates the image embeddings using the image patches.

5. The computer-implemented method of claim 1, further comprising:
generating data patches of the timeseries data,
wherein the tokenizer uses the data patches to generate the time series embeddings.

6. The computer-implemented method of claim 5, further comprising:
generating a univariate time series by concatenating the multivariate time series data associated with each data patch; and
generating, via a 1-dimensional convolution layer, the time series embeddings using the univariate time series.

7. The computer-implemented method of claim 1, wherein:
the set of graphical representations include at least a first line plot and a second line plot;
the set of graphical representations are color coded such that the first line plot is displayed in a different color than the second line plot; and
the image embeddings are generated based on the colors of the set of graphical representations.

8. The computer-implemented method of claim 1, wherein:
the set of graphical representations include at least a first line plot and a second line plot; and
the digital image displays the first line plot and the second line in a same row or in a same column.

9. The computer-implemented method of claim 1, wherein the task includes classification, anomaly detection, forecasting, imputation, or clustering.

10. The computer-implemented method of claim 1, further comprising:
controlling an actuator based on the output data.

11. A system comprising:
one or more processors;
one or more computer memory in data communication with the one or more processors, the one or more computer memory having computer readable data stored thereon, the computer readable data including instructions that, when executed by one or more processors, causes the one or more processors to perform a method for performing a task in a time series domain, the method including
receiving time series data that include numerical data;
generating a digital image that displays a set of graphical representations of the time series data;
generating, via a tokenizer, time series embeddings using the time series data; generating, via an image encoder, image embeddings using pixels of the digital image;
generating, via a pretrained large language model (LLM), semantic embeddings based on at least the time series embeddings and the image embeddings; and
performing, via at least one task head, the task and generating output data for the task using the semantic embeddings.

12. The system of claim 11, wherein the method further comprises:
receiving text data that provide context for the time series data;
generating, via a pretrained text encoder, text embeddings using the text data; and
generating concatenated data by concatenating the time series embeddings, the image embeddings, and the text embeddings,
wherein the pretrained LLM uses the concatenated data to generate the semantic embeddings.

13. The system of claim 11, wherein:
the time series data include a set of channels with diagnostic data; and
the set of graphical representations include at least one line plot for each channel of diagnostic data.

14. The system of claim 11, wherein the method further comprises:
generating image patches of the digital image,
wherein the image encoder receives the image patches as input and generates the image embeddings using the image patches.

15. The system of claim 11, wherein the method further comprises:
generating data patches of the timeseries data,
wherein the tokenizer uses the data patches to generate the time series embeddings.

16. The system of claim 15, wherein the method further comprises:
generating a univariate time series by concatenating the multivariate time series data associated with each data patch; and
generating, via a 1-dimensional convolution layer, the time series embeddings using the univariate time series.

17. The system of claim 11, wherein:
the set of graphical representations include at least a first line plot and a second line plot;
the set of graphical representations are color coded such that the first line plot is displayed in a different color than the second line plot; and
the image embeddings are generated based on the colors of the set of graphical representations.

18. The system of claim 11, wherein:
the set of graphical representations include at least a first line plot and a second line plot; and
the digital image displays the first line plot and the second line in a same row or in a same column.

19. The system of claim 11, wherein the task includes classification, anomaly detection, forecasting, imputation, or clustering.

20. The system of claim 11, further comprising:
an actuator,
wherein the actuator is controlled based at least on the output data.
